# FASCICULE DE BREVET EUROPEEN

(11) **EP 0 614 618 B1**
(45) Date de publication et mention de la délivrance du brevet: **26.08.1998**
(21) Numéro de dépôt: 94400513.1
(22) Date de dépôt: 09.03.1994
(51) Int. Cl.: A23N 12/02, B08B 3/06

(54) **Appareil pour le lavage des betteraves**
Rübenwaschmaschine
Apparatus for washing beets

(30) Priorité: 10.03.1993 FR 9302774
(43) Date de publication de la demande: 14.09.1994
(73) Titulaire: F C B, 93107 Montreuil Cédex (FR)
(72) Inventeur: Neve, Herve, F-59295 Paillencourt (FR)
(74) Mandataire: Duthoit, Michel

(56) Documents cités:
- DE-C- 2 686
- DE-C- 928 922
- FR-A- 1 211 192
- FR-A- 1 517 788
- FR-A- 2 094 625
- FR-A- 2 658 995
- GB-A- 2 252 493
- US-A- 1 867 533
- US-A- 2 558 138
- US-A- 3 487 840

## Description

La présente invention a pour objet un appareil pour le lavage des betteraves constitué par un tambour rotatif allongé et à axe horizontal, dont la paroi est perforée et qui est équipé intérieurement d'hélices ou de pales assurant le déplacement des betteraves d'une de ses extrémités à l'autre et de rampes munies d'injecteurs qui pulvérisent de l'eau sous pression sur les betteraves. Ces appareils sont généralement utilisés en sucrerie en tête de l'atelier de lavage pour le débourbage des betteraves.

Le but de la présente invention est de permettre l'utilisation d'un appareil de ce type pour effectuer le lavage final des betteraves, à la place d'un laveur à secousses habituellement utilisé pour cette opération, et assurer un meilleur nettoyage des sillons saccharifères.

L'appareil objet de l'invention est caractérisé en ce que le tambour présente sur sa surface intérieure des aspérités de faible hauteur (inférieure à 10 mm) et le tambour ainsi que son équipement sont dimensionnés pour permettre le déplacement des betteraves en monocouche. Ces aspérités ont pour fonction de faire tourner les betteraves, de façon que toute leur surface soit soumise à l'action des jets d'eau, et, en pénétrant dans les sillons saccharifères, d'en assurer le nettoyage. Elles pourront être constituées, par exemple, par des nervures parallèles à l'axe du tambour.

De préférence, la paroi du tambour sera constituée par une tôle perforée revêtue intérieurement de panneaux en caoutchouc, également perforés, sur lesquels seront formées lesdites aspérités. Ces panneaux pourront être auto-portants et constitués, par exemple, par un cadre métallique et un treillis revêtus de caoutchouc. Les panneaux seront fixés sur la paroi en tôle du tambour au moyen de clames pour éviter le contact des betteraves avec des boulons ou autres moyens de fixation analogues. Un espace sera ménagé entre les panneaux et la tôle pour permettre l'évacuation de l'eau de lavage.

Pour assurer le déplacement des betteraves en monocouche, l'appareil comporte un mécanisme d'entraînement en rotation du tambour qui permet de régler la vitesse de rotation en fonction du débit des betteraves.

La description qui suit se réfère aux dessins l'accompagnant qui montrent, à titre d'exemple non-limitatif, une forme de réalisation de l'invention et sur lesquels:

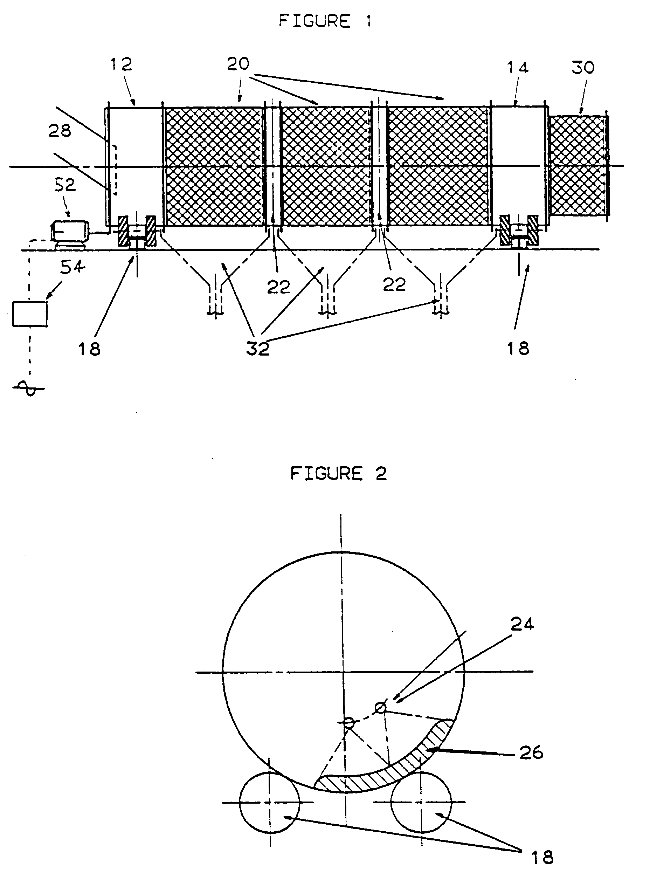

La figure 1 est une vue en élévation d'un tambour de lavage conforme à l'invention;
La figure 2 est une vue en coupe transversale du tambour de la figure 1;

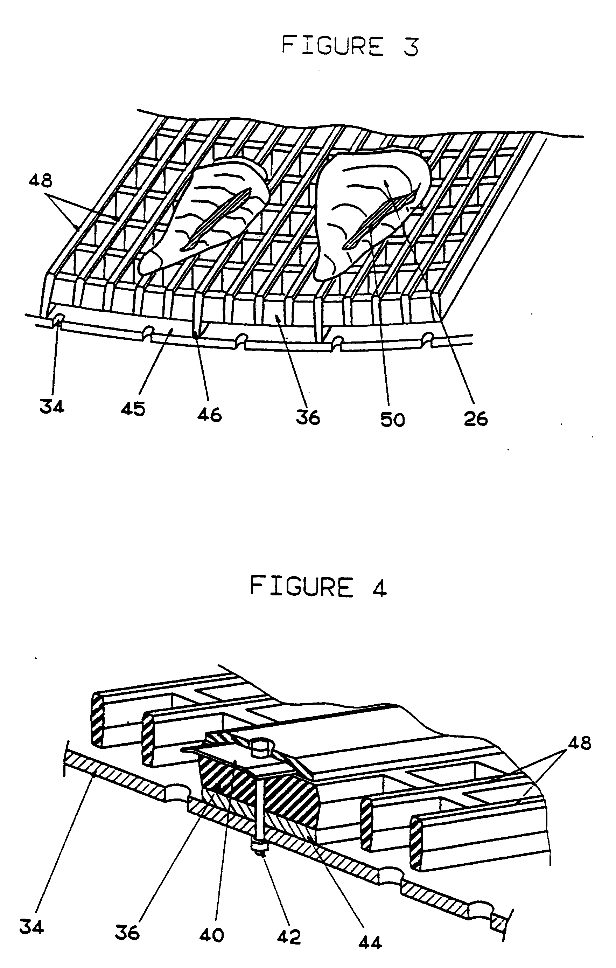

La figure 3 est une vue agrandie, en perspective, d'une partie de la paroi du tambour ; et
La figure 4 est une vue à grande échelle montrant le mode de fixation des panneaux sur la virole métallique du tambour.

L'appareil de lavage représenté sur les dessins est constitué par un tambour allongé disposé avec son axe horizontal ou légèrement incliné. Il est formé de tronçons à paroi pleine et de tronçons à paroi perforée. Les deux tronçons à paroi pleine 12 et 14 situés à ses extrémités constituent des chemins de roulement pour des galets 18 qui servent à supporter le tambour et à l'entraîner en rotation.

Entre les tronçons 12 et 14, le tambour comprend trois tronçons à paroi perforée 20 séparés par des courts tronçons à paroi pleine 22.

Des rampes équipées d'injecteurs 24 sont disposées à l'intérieur du tambour, sur toute sa longueur, et permettent de pulvériser de l'eau sous pression sur les betteraves 26; la position des rampes et l'orientation des injecteurs sont réglables.

Une goulotte d'alimentation 28 permet d'introduire les betteraves dans le tambour, à l'une de ses extrémités. Un tronçon de virole perforé 30 monté à l'autre extrémité du tambour permet l'égouttage final des betteraves.

Des trémies de réception des eaux chargées de terre et d'impuretés 32 sont placées sous chacun des tronçons 20.

Les tronçons 20 sont constitués par une virole métallique perforée 34 revêtue intérieurement de panneaux 36 munis d'ouvertures occupant la majeure partie de leur surface à la manière des panneaux criblants. Ces panneaux sont formés d'un treillis fixé sur un cadre métallique et revêtu, ainsi que le cadre, de caoutchouc.

La fixation des panneaux 36 sur la virole 34 est assurée par des clames 40 et des boulons 42. Des cales 44 ménagent entre les panneaux et la virole un espace 45 permettant l'écoulement des eaux qui ont traversé les panneaux vers les trous de la virole. Dans le même but, les panneaux peuvent être munis de talons 46.

La surface des panneaux 36 présente des nervures 48, parallèles à l'axe du tambour, qui constituent ces aspérités longitudinales de faible hauteur favorisant le nettoyage du sillon saccharifère 50 des betteraves et leur retournement pendant leur séjour dans le tambour.

Dans l'exemple représenté, les nervures sont continues, mais elles pourraient être discontinues ou remplacées par des rangées de pointes ou de dents; dans tous les cas, la hauteur de ces aspérités au-dessus de la surface intérieure des panneaux sera inférieure à 10 mm.

Le tambour est en outre équipé intérieurement d'hélices, non représentées, qui assurent, de façon connue, le transfert des betteraves de l'extrémité d'entrée jusqu'à l'extrémité de sortie. Ces hélices sont particulièrement étudiées pour assurer le déplacement des betteraves en monocouche. Les dimensions du tambour et sa vitesse de rotation sont évidemment choisies, en fonction du débit de betteraves à traiter, pour permettre ce mode de fonctionnement. Le mécanisme d'entraînement en rotation du tambour 52 est équipé d'un variateur de vitesse 54 permettant d'optimiser la couche de betteraves.

## Revendications

1. Appareil pour le lavage de betteraves constitué par un tambour rotatif allongé dont la paroi est perforée et qui est équipé intérieurement de moyens pour assurer le déplacement des betteraves d'une de ses extrémités à l'autre et de moyens pour pulvériser de l'eau sous pression sur les betteraves, caractérisé en ce que le tambour est constitué par une virole métallique perforée (34) revêtue intérieurement de panneaux en caoutchouc (36), également perforés et sur lesquels sont formées des aspérités (48) de faible hauteur.

2. Appareil selon la revendication 1, caractérisé en ce que lesdites aspérités sont constituées par des nervures (48) parallèles à l'axe du tambour.

3. Appareil selon la revendication 1 ou 2, caractérisé en ce que lesdits panneaux (36) sont constitués par un cadre métallique et un treillis revêtus de caoutchouc.

4. Appareil selon la revendication 1, 2 ou 3, caractérisé en ce que lesdits panneaux (36) sont fixés sur la virole (34) au moyen de clames (40).

5. Appareil selon la revendication 1, 2, 3 ou 4, caractérisé en ce qu'un espace (45) est ménagé entre la virole (34) et les panneaux (36).

6. Appareil selon l'une quelconque des revendications précédentes, caractérisé en ce qu'il comporte un mécanisme d'entraînement en rotation du tambour équipé d'un variateur de vitesse qui permet de régler la vitesse de rotation du tambour en fonction du débit des betteraves de façon à assurer le déplacement des betteraves en monocouche.

7. Appareil selon l'une quelconque des revendications précédentes, caractérisé en ce que le tambour comporte, à son extrémité de sortie, une zone d'égouttage des betteraves (30).

## Claims

1. Apparatus for washing beetroots constituted by an elongated rotary drum, the wall of which is perforated and which is internally equipped with means for ensuring the displacement of the beetroots from one of its ends to the other, and with means for spraying the beetroots with water under pressure, characterised in that the drum is constituted by a perforated metallic shell (34) internally lined with rubber panels (36), likewise perforated, and on which are formed low protuberances (48).

2. Apparatus according to claim 1, characterised in that the said protuberances are constituted by ribs (48) parallel to the axis of the drum.

3. Apparatus according to claim 1 or 2, characterised in that the said panels (36) are constituted by a metallic frame and a lattice both covered with rubber.

4. Apparatus according to claim 1, 2 or 3, characterised in that the said panels (36) are fixed to the shell (34) by means of clamping claws (40).

5. Apparatus according to claim 1, 2, 3 or 4, characterised in that a space (45) is provided between the shell (34) and the panels (36).

6. Apparatus according to any one of the preceding claims, characterised in that it comprises a mechanism for rotating the drum equipped with a variable speed drive that enables the speed of rotation of the drum to be adjusted as a function of the flow of beetroots so as to ensure that the beetroots are displaced in a single layer.

7. Apparatus according to any one of the preceding claims, characterised in that the drum comprises, at is output end, a beetroot draining area (30).

## Patentansprüche

1. Gerät zum Waschen von Rüben, bestehende aus einer länglichen Drehtrommel, deren Wand durchlocht ist, und die inwendig mit Mitteln, um die Verschiebung der Rüben von ihrem einen Ende zum anderen zu sichern und mit Mitteln, um die Rüben mit unter Druck stehendem Wasser zu besprühen, versehen ist, dadurch gekennzeichnet, daß die Trommel aus einem durchlochten Metallmantel (34) besteht, der inwendig mit ebenfalls durchlochten Gummitafeln (36) verkleidet ist, auf denen Unebenheiten (48) geringer Höhe gebildet sind.

2. Gerät nach Anspruch 1, dadurch gekennzeichnet, daß die genannten Unebenheiten aus parallel zur Achse der Trommel verlaufenden Rippen (48) bestehen.

3. Gerät nach Anspruch 1 oder 2, dadurch gekennzeichnet, daß die genannten Tafeln (36) aus einem Metallrahmen und einem Gitter bestehen, die mit Gummi verkleidet sind.

4. Gerät nach Anspruch 1, 2 oder 3, dadurch gekennzeichnet, daß die genannten Tafeln (36) mittels Klammern (40) am Mantel (34) befestigt sind.

5. Gerät nach Anspruch 1, 2, 3 oder 4, dadurch gekennzeichnet, daß ein Spalt (45) zwischen dem Mantel (34) und den Tafeln (36) vorgesehen ist.

6. Gerät nach irgendeinem der vorgehenden Ansprüche, dadurch gekennzeichnet, daß es einen Drehantriebsmechanismus für die Trommel umfaßt, der mit einem Geschwindigkeitsregler versehen ist, der es erlaubt, die Drehgeschwindigkeit der Trommel in Abhängigkeit von der Durchgangsmenge der Rüben so zu regeln, daß die einlagige Verschiebung der Rüben gesichert wird.

7. Gerät nach irgendeinem der vorgehenden Ansprüche, dadurch gekennzeichnet, daß die Trommel an ihrem Ausgangsende einen Abtropfbereich für die Rüben (30) umfaßt.
